# EUROPÄISCHE PATENTSCHRIFT

(11) **EP 4 100 302 B1**
(45) Veröffentlichungstag und Bekanntmachung des Hinweises auf die Patenterteilung: **14.02.2024**
(21) Anmeldenummer: 20833766.7
(22) Anmeldetag: 15.12.2020
(51) Int. Cl.: B62H 1/02

(54) **HAUPTSTÄNDER FÜR EIN NEIGEFAHRZEUG**
MAIN STAND FOR A TILTING VEHICLE
SUPPORT PRINCIPAL POUR UN VÉHICULE INCLINABLE

(30) Priorität: 04.02.2020 DE 102020102690
(43) Veröffentlichungstag der Anmeldung: 14.12.2022
(73) Patentinhaber: Bayerische Motoren Werke Aktiengesellschaft, 80809 München (DE)
(72) Erfinder: HIRL, Andreas, 84323 Massing (DE)
(86) Internationale Anmeldenummer: PCT/EP2020/086187
(87) Internationale Veröffentlichungsnummer: WO 2021/155984

(56) Entgegenhaltungen:
- EP-A2- 1 854 710
- CN-U- 201 834 092
- JP-U- S60 121 981

## Beschreibung

Die Erfindung betrifft einen Hauptständer für ein Neigefahrzeug mit den Merkmalen des Oberbegriffs des Anspruchs 1.

Hauptständer für Neigefahrzeuge sind in unterschiedlichen Ausführungsformen aus dem Stand der Technik bekannt. Bei diesen stützt ein Stützelement mit einem Auflageabschnitt das Neigefahrzeug in einer Stützstellung des Stützelements das Neigefahrzeug gegen ein Bewegen, insbesondere Umkippen, ab. Um das Stützelement auf einfache Weise in die Stützstellung zu überführen, umfassen bekannte Hauptständer drehfest am Stützelement festgelegte Betätigungseinheiten, die sich schräg oder quer von dem Stützelement wegerstrecken.

Hierbei hat es sich als nachteilig herausgestellt, dass die Betätigungseinheiten in einer Grundstellung des Stützelements, in der das Stützelement zum Boden beabstandet ist, sich derart in Richtung Sitzeinheit des Neigefahrzeugs erstrecken, dass ein Benutzer des Neigefahrzeugs mit einem Fuß- oder unterem Beinbereich beim Fahren mit dem Neigefahrzeug an die Betätigungseinheit anstößt.

Gattungsgemäße Hauptständer sind bekannt aus EP 1 854 710 A2, JP S60 121981 U und CN 201 834 092 U. Das Dokument EP1854710A2 wird als der nächste Stand der Technik betrachtet.

Eine Aufgabe eines Ausführungsbeispiels der Erfindung ist, einen Hauptständer für ein Neigefahrzeug vorzuschlagen, durch den eine Beeinträchtigung des Nutzers des Neigefahrzeugs beim Betrieb des Neigefahrzeugs zumindest reduziert ist.

Diese Aufgabe wird bei einem eingangs genannten Hauptständer dadurch gelöst, dass das bewegbare Betätigungselement und das ortsfeste Betätigungselement ineinander teleskopierbar ausgebildet sind, wobei die Betätigungseinheit zumindest durch eine Translationsbewegung in die Betätigungsposition überführbar ist.

Dadurch, dass der Hauptständer eine Betätigungseinheit umfasst, die von einer Ruheposition in eine Betätigungsposition überführbar ist, ist die Betätigungseinheit in der Ruheposition bezüglich ihrer Erstreckung quer zur Längserstreckungsrichtung des Stützelements reduziert. Hierdurch kann bei Betrieb des Neigefahrzeugs gewährleistet werden, dass die Betätigungseinheit nicht mit dem Fuß- oder Beinbereich eines Nutzers des Neigefahrzeugs kollidiert.

Dadurch, dass die Betätigungseinheit von der Ruheposition in die Betätigungsposition überführbar ist, ist zudem gewährleistet, dass beim gewünschten Betätigen des Hauptständers die Betätigungseinheit eine ausreichende Erstreckung umfasst, so dass der Hauptständer über die Betätigungseinheit betätigt werden kann, wobei das Stützelement von der Grundstellung in die Stützstellung überführt wird.

Der Hauptständer kann dazu dienen, das Neigefahrzeug aufzubocken und wieder abzubocken. Im aufgebockten Zustand des Neigefahrzeugs ist mindestens eine Radeinheit des Neigefahrzeugs zum Boden beabstandet.

Unter einem Neigefahrzeug werden Fahrräder, Motorräder oder motorradähnliche Kraftfahrzeuge, wie Motorroller, insbesondere zwei-, drei- oder vierrädrige Motorroller, Scooter, neigbare Trikes, Quads oder Dergleichen verstanden.

Dadurch, dass die Betätigungseinheit bezüglich ihrer Erstreckung quer zur Längserstreckungsrichtung des Stützelements einstellbar ist, können zum Aufbocken günstige Hebelverhältnisse des Hauptständers zur Verfügung gestellt werden und gleichzeitig ein Kollidieren während der Fahrt mit dem Fuß- oder Beinbereich des Benutzers des Neigefahrzeugs verhindert werden.

Durch das ortsfeste Betätigungselement und das bewegbare Betätigungselement ist gewährleistet, dass die Betätigungseinheit auf einfache Weise, beispielsweise durch einen Fuß des Benutzers des Neigefahrzeugs, von der Ruheposition in die Betätigungsposition überführbar ist. Darüber hinaus ist durch das Vorsehen eines ortsfesten Betätigungselements, das unmittelbar am Stützelement festgelegt ist, eine hohe Kraftübertragung, insbesondere ein Übertragen von hohen Drehmomenten, gewährleistet.

Dadurch, dass das bewegbare Betätigungselement und das ortsfeste Betätigungselement ineinander teleskopierbar ausbildbar sind, kann die Betätigungseinheit auf einfache Weise und stufenlos in unterschiedliche Positionen mit unterschiedlichen Längserstreckungen ausgefahren werden.

In einer nicht beanspruchten Ausführungsform des Hauptständers ist vorgesehen, dass die Betätigungseinheit mindestens ein relativ zum Stützelement bewegbares Betätigungselement umfasst, das von der Ruheposition in die Betätigungsposition und zurück durch Drehung um eine Drehachse überführbar ist.

Solchenfalls kann die Drehachse beispielsweise unmittelbar am Übergang von dem Stützelement auf die Betätigungseinheit vorgesehen sein. Solchenfalls kann die Betätigungseinheit in der Ruheposition im Wesentlichen parallel zum Stützelement verlaufen und beim Überführen in die Betätigungsposition in Gänze bezüglich des Stützelements bewegt, insbesondere ausgeklappt, werden.

Hierdurch ist eine besonders kompakte Anordnung der einzelnen Elemente des Hauptständers in der Grundstellung des Stützelements ermöglicht.

Bei einer nicht beanspruchten Weiterbildung letztgenannter Ausführungsform ist vorgesehen dass die Betätigungseinheit ein Scharniermittel umfasst, das zwischen dem ortsfesten Betätigungselement und dem bewegbaren Betätigungselement angeordnet ist, das die Drehachse umfasst und durch das das bewegbare Betätigungselement um die Drehachse drehbar ist, wobei die Betätigungseinheit zumindest durch eine Rotationsbewegung um die Drehachse in die Betätigungsposition überführbar ist.

Wenn die Betätigungseinheit das Scharniermittel umfasst, können das bewegbare Betätigungselement und das ortsfeste Betätigungselement einfach ausgebildet werden.

Das bewegbare Betätigungselement und das ortsfeste Betätigungselement können einander zumindest in der Betätigungsposition bezüglich ihrer Längserstreckungsrichtung fortsetzen oder parallel oder schräg zueinander verlaufend angeordnet sein.

Wenn die Betätigungseinheit das Scharniermittel umfasst, erweist es sich als vorteilhaft, wenn die Drehachse des Scharniermittels zu einem Massemittelpunkt des ortsfesten Betätigungselements quer zur Längserstreckungsrichtung des ortsfesten Betätigungselements betrachtet, beabstandet ist.

Durch das Anordnen der Drehachse des Scharniermittels zum Massemittelpunkt des ortsfesten Betätigungselements, kann gewährleistet werden, dass das bewegbare Betätigungselement in der Betätigungsposition allein aufgrund seiner Schwerkraft in der Betätigungsposition gehalten werden.

Darüber hinaus ist hierdurch gewährleistet, dass bei einem Überführen des Stützelements von der Stützstellung in die Grundstellung, das bewegbare Betätigungselement um die Drehachse des Scharniermittels von der Betätigungsposition in die Ruheposition zurückschnappt.

Darüber hinaus ist bei einer nicht beanspruchten Weiterbildung der beiden letztgenannten Ausführungsformen vorgesehen, dass das Scharniermittel mindestens einen Anschlag umfasst, der eine Bewegung des bewegbaren Betätigungselements von der Ruheposition in die Betätigungsposition bei Erreichen der Betätigungsposition zumindest begrenzt.

Hierdurch können das bewegbare Betätigungselement und das ortsfeste Betätigungselement in der Betätigungsposition flächenhaft aneinander anliegen.

Zudem lässt sich hierdurch eine einfache und kostengünstige mechanische Umsetzung des Hauptständers gewährleisten.

Um ein unbeabsichtigtes Überführen des bewegbaren Betätigungselements von der Ruheposition in die Betätigungsposition zumindest zu reduzieren, erweist es sich als vorteilhaft, wenn der Hauptständer zumindest ein Haltemittel umfasst, durch das das bewegbare Betätigungselement in der Ruheposition gegen ein Überführen in die Betätigungsposition festlegbar ist.

Das Haltemittel lässt sich einfach und kostengünstig ausbilden, wenn das Haltemittel ein Federelement, wie Puffer, insbesondere Gummipuffer, und/oder ein Magnetelement umfasst.

Hierdurch kann das bewegbare Betätigungselement mit einer ausreichenden Haltekraft in der Ruheposition festgelegt werden und für einen Benutzer des Neigefahrzeugs ohne große Kraftanstrengung von der Ruheposition in die Betätigungsposition überführt werden.

Das Betätigen der Betätigungseinheit, insbesondere des bewegbaren Betätigungselements lässt sich weiter vereinfachen, wenn der Hauptständer mindestens ein als Umklappmittel ausgebildetes Spannmittel umfasst, durch das das bewegbare Betätigungselement in Abhängigkeit des zum ortsfesten Betätigungselements einbeschriebenen Winkels in die Ruheposition und in die Betätigungsposition spannbar ist.

Solchenfalls kann das Umklappmittel beispielsweise eine Umklappfeder umfassen, durch die das bewegbare Betätigungselement bis zu einem bestimmten Winkel in Richtung auf die Ruheposition gespannt ist und bei Überschreiten des bestimmten Winkels in Richtung auf die Betätigungsposition spannbar ist. Solchenfalls kann das Umklappmittel auch ein Element des Haltemittels sein.

Schließlich erweist es sich als vorteilhaft, wenn das Stützelement in der Stützstellung eine Radeinheit des Neigefahrzeugs zum Boden beabstandet.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Hauptständers.

In der Zeichnung zeigt:
- Figur 1: Eine perspektivische Seitenansicht auf ein nicht beanspruchtes Beispiel des Hauptständers mit einem Stützelement in einer Grundstellung und einer Betätigungseinheit in einer Ruheposition;
- Figur 2: Eine perspektivische Seitenansicht auf ein nicht beanspruchtes Beispiel gemäß Figur 1 mit dem Stützelement in der Grundstellung und der Betätigungseinheit in der Betätigungsposition.

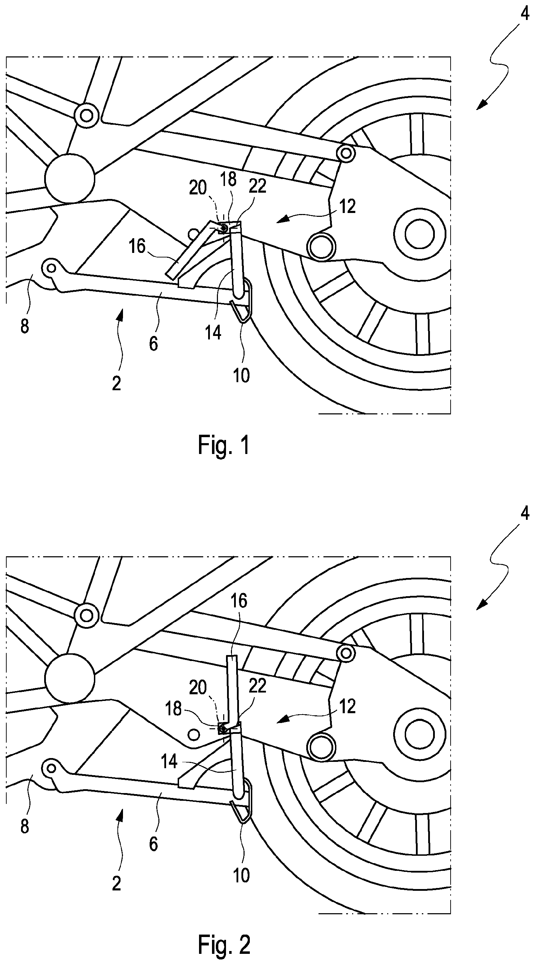

Die Figuren zeigen ein nicht beanspruchtes Beispiel eines insgesamt mit dem Bezugszeichen 2 versehenen Hauptständers für ein Neigefahrzeug 4. Der Hauptständer 2 umfasst ein Stützelement 6, das an einer Tragstruktur 8 des Neigefahrzeugs 4 drehbar festgelegt ist. Das Stützelement 6 ist von einer Stützstellung, in der das Stützelement 6 mit einem Auflageabschnitt 10 an einem Boden anliegt und in der das Neigefahrzeug 4 durch das Stützelement 6 gegen ein Bewegen, insbesondere Umkippen, gehalten ist, in eine Grundstellung überführbar (Figuren 1 und 2), in der das Stützelement 6 zum Boden berührungsfrei beabstandet angeordnet ist.

Darüber hinaus umfasst der Hauptständer 2 mindestens eine Betätigungseinheit 12, die bei dem in den Figuren gezeigten Ausführungsbeispiel unmittelbar am Stützelement 6 festgelegt und zumindest abschnittsweise relativ zum Stützelement 6 bewegbar festgelegt ist. Die Betätigungseinheit 12 ist von einer Ruheposition (Figur 1), in der die Erstreckung der Betätigungseinheit 12 quer zur Längserstreckungsrichtung des Stützelements 6 betrachtet, minimal ist, in eine Betätigungsposition (Figur 2) überführbar, in der die Erstreckung der Betätigungseinheit 12 quer zur Längserstreckungsrichtung des Stützelements 6 betrachtet, maximal ist. In der Betätigungsposition ist die Betätigungseinheit 12 durch einen Benutzer des Neigefahrzeugs 4 zum Überführen des Stützelements 6 von der Grundstellung in die Stützstellung betätigbar.

Die Figuren 1 und 2 zeigen ein nicht beanspruchtes Beispiel des Hauptständers 2, bei dem die Betätigungseinheit 12 ein ortsfestes Betätigungselement 14 umfasst, das unmittelbar am Stützelement 6 festgelegt ist. Das Betätigungselement 14 ist schräg vom Stützelement 6 wegerstreckt. Auf der dem Stützelement 6 abgewandten Ende des ortsfesten Betätigungselements 14 ist ein bewegbares Betätigungselement 16 am ortsfesten Betätigungselement 14 festgelegt. Hierbei ist zwischen dem bewegbaren Betätigungselement 16 und dem ortsfesten Betätigungselement 14 ein Scharniermittel 18 vorgesehen, durch das das bewegbare Betätigungselement 16 um eine Drehachse 20 von der Ruheposition (Figur 1) in die Betätigungsposition (Figur 2) mittels Drehung überführbar ist. Die Drehachse 20 des Scharniermittels 18 ist dabei zu einem Massemittelpunkt des ortsfesten Betätigungselement 14 quer zur Längserstreckungsrichtung des ortsfesten Betätigungselements 14 betrachtet, beabstandet.

Darüber hinaus umfasst das Scharniermittel 18 einen Anschlag 22, der eine Bewegung des bewegbaren Betätigungselements 16 von der Ruheposition in die Betätigungsposition bei Erreichen der Betätigungsposition begrenzt.

Im Folgenden wird kurz die Wirkungsweise des Hauptständers 2 beschrieben:
Zum Überführen des Stützelement 6 von der Grundstellung in die Stützstellung, wird manuell oder mittels eines Fußes durch den Benutzer des Neigefahrzeugs 4 das bewegbare Betätigungselement 16 aus der Ruheposition (Figur 1) in die Betätigungsposition (Figur 2) überführt. Aufgrund der zum Schwerpunkt des bewegbaren Betätigungselements 16 versetzt verlaufenden Drehachse 20 wird das bewegbare Betätigungselement 16 an dem Anschlag 22 anliegend, in der Betätigungsposition aufgrund der Schwerkraft gehalten. In der Betätigungsposition ist die Betätigungseinheit 12 betätigbar, um das Stützelement 6 von der Grundstellung in die Stützstellung zu überführen. Die Betätigungseinheit 12 dient hierbei als Hebel.

Wenn das Neigefahrzeug 4 von der Stützstellung zurück in die Ruhestellung des Stützelements 6 überführt wird, wird hierbei, aufgrund der Drehbewegung des Stützelements von der Stützstellung in die Grundstellung aufgrund der Masseträgheit das bewegbare Betätigungselement 16 um die Drehachse 20 gedreht. Hierbei wird das bewegbare Betätigungselement 16 automatisch in der Ruheposition angeordnet.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Hauptständer
- 4: Neigefahrzeug
- 6: Stützelement
- 8: Tragstruktur
- 10: Auflageabschnitt
- 12: Betätigungseinheit
- 14: ortsfestes Betätigungselement
- 16: bewegbares Betätigungselement
- 18: Scharniermittel
- 20: Drehachse
- 22: Anschlag

## Patentansprüche

1. Hauptständer (2) für ein Neigefahrzeug (4) mit mindestens einem Stützelement (6), das an einer Tragstruktur (8) des Neigefahrzeugs (4) drehbar festlegbar oder festgelegt ist und das von einer Stützstellung, in der das Stützelement (6) mit einem Auflageabschnitt (10) an einem Boden anlegbar ist oder anliegt und in der das Neigefahrzeug (4) durch das Stützelement (6) gegen ein Bewegen, insbesondere Umkippen, gehalten ist, in eine Grundstellung überführbar ist, in der das Stützelement (6) zum Boden berührungsfrei beabstandet angeordnet ist, und mit mindestens einer Betätigungseinheit (12), die mittelbar oder unmittelbar am Stützelement (6) und zumindest abschnittsweise relativ zum Stützelement (6) bewegbar festlegbar oder festgelegt ist und die von einer Ruheposition, in der die Erstreckung der Betätigungseinheit (12) quer zur Längserstreckungsrichtung des Stützelements (6) betrachtet minimal ist, in eine Betätigungsposition überführbar ist, in der die Erstreckung der Betätigungseinheit (12) quer zur Längserstreckungsrichtung des Stützelements (6) betrachtet maximal ist und durch einen Nutzer des Neigefahrzeugs (4) zum Überführen des Stützelements (6) von der Grundstellung in die Stützstellung betätigbar ist, wobei die Betätigungseinheit (12) mindestens ein relativ zum Stützelement (6) ortsfestes Betätigungselement (14) umfasst, das unmittelbar am Stützelement (12) festlegbar oder festgelegt ist, das quer oder schräg vom Stützelement (12) wegerstreckt ist und an dessen dem Stützelement (12) abgewandten Ende ein bewegbares Betätigungselement (16) festlegbar oder festgelegt ist, **dadurch gekennzeichnet, dass** das bewegbare Betätigungselement (16) und das ortsfeste Betätigungselement (14) ineinander teleskopierbar ausgebildet sind, wobei die Betätigungseinheit (12) zumindest durch eine Translationsbewegung in die Betätigungsposition überführbar ist.

2. Hauptständer (2) nach Anspruch 1, **dadurch gekennzeichnet, dass** das Stützelement (6) in der Stützstellung eine Radeinheit des Neigefahrzeugs (4) zum Boden beabstandet.

## Claims

1. Main stand (2) for a tilting vehicle (4), having at least one supporting element (6), which can be secured or is secured in a rotatable manner to a carrying structure (8) of the tilting vehicle (4) and which can be transferred from a supporting position, in which the supporting element (6), by way of a bearing portion (10), can be made to bear or bears against a ground surface, and in which the tilting vehicle (4) is restrained, by means of the supporting element (6), against moving, in particular against tipping over, to a basic position, in which the supporting element (6) is arranged in a contact-free and spaced-apart manner with respect to the ground surface, and having at least one actuating unit (12), which can be secured or is secured indirectly or directly to the supporting element (6), said actuating unit being able to move, at least to some extent, relative to the supporting element (6), and which can be transferred from a rest position, in which the extent of the actuating unit (12), when viewed transversely with respect to the direction of longitudinal extent of the supporting element (6), is at a minimum, to an actuating position, in which the extent of the actuating unit (12), when viewed transversely with respect to the direction of longitudinal extent of the supporting element (6), is at a maximum, and which can be actuated by a user of the tilting vehicle (4) in order for the supporting element (6) to be transferred from the basic position to the supporting position, wherein the actuating unit (12) comprises at least one actuating element (14) which is stationary relative to the supporting element (6), can be secured or is secured directly to the supporting element (12), and extends transversely or obliquely away from the supporting element (12), and a movable actuating element (16) can be secured or is secured to that end of said actuating element which faces away from the supporting element (12), **characterized in that** the movable actuating element (16) and the stationary actuating element (14) can be telescoped one inside the other, wherein the actuating unit (12) can be transferred to the actuating position at least by means of a translatory movement.

2. Main stand (2) according to Claim 1, **characterized in that**, in the supporting position, the supporting element (6) spaces a wheel unit of the tilting vehicle (4) apart from the ground surface.

## Revendications

1. Support principal (2) pour un véhicule inclinable (4) avec au moins un élément d'appui (6) qui peut être fixé ou est fixé de manière rotative sur une structure porteuse (8) du véhicule inclinable (4) et qui peut être transféré d'une position d'appui, dans laquelle l'élément d'appui (6) peut être appliqué ou s'applique par une section de pose (10) sur un sol et dans laquelle le véhicule inclinable (4) est maintenu par l'élément d'appui (6) contre un mouvement, notamment un renversement, à une position de base, dans laquelle l'élément d'appui (6) est agencé écarté du sol sans contact, et avec au moins une unité d'actionnement (12) qui peut être fixée ou est fixée directement ou indirectement sur l'élément d'appui (6) et au moins par sections de manière mobile par rapport à l'élément d'appui (6) et qui peut être transférée d'une position de repos, dans laquelle l'extension de l'unité d'actionnement (12) est minimale, considérée transversalement à la direction d'extension longitudinale de l'élément d'appui (6), à une position d'actionnement, dans laquelle l'extension de l'unité d'actionnement (12) est maximale, considérée transversalement à la direction d'extension longitudinale de l'élément d'appui (6), et peut être actionnée par un utilisateur du véhicule inclinable (4) pour transférer l'élément d'appui (6) de la position de base à la position d'appui, l'unité d'actionnement (12) comprenant au moins un élément d'actionnement (14) fixe par rapport à l'élément d'appui (6), qui peut être fixé ou est fixé directement à l'élément d'appui (12), qui s'étend transversalement ou obliquement à partir de l'élément d'appui (12) et à l'extrémité duquel, détournée de l'élément d'appui (12), un élément d'actionnement mobile (16) peut être fixé ou est fixé, **caractérisé en ce que** l'élément d'actionnement mobile (16) et l'élément d'actionnement fixe (14) sont réalisés de manière à pouvoir être télescopés l'un dans l'autre, l'unité d'actionnement (12) pouvant être transférée dans la position d'actionnement au moins par un mouvement de translation.

2. Support principal (2) selon la revendication 1, **caractérisé en ce que** l'élément d'appui (6), dans la position d'appui, écarte une unité de roue du véhicule inclinable (4) du sol.
